# EUROPÄISCHE PATENTSCHRIFT

(11) **EP 3 147 472 B1**
(45) Veröffentlichungstag und Bekanntmachung des Hinweises auf die Patenterteilung: **15.05.2019**
(21) Anmeldenummer: 16188440.8
(22) Anmeldetag: 13.09.2016
(51) Int. Cl.: F01N 13/18

(54) **ABGASNACHBEHANDLUNGSEINRICHTUNG**
EXHAUST GAS AFTERTREATMENT DEVICE
DISPOSITIF DE POST-TRAITEMENT DE GAZ D'ÉCHAPPEMENT

(30) Priorität: 25.09.2015 DE 102015218503
(43) Veröffentlichungstag der Anmeldung: 29.03.2017
(73) Patentinhaber: Eberspächer Exhaust Technology GmbH & Co. KG, 66539 Neunkirchen (DE)
(72) Erfinder: Neumann, Felix, 73773 Aichwald (DE); Kauderer, Alexander, 73329 Kuchen (DE); Krammer, Simon, 71364 Winnenden (DE); Karelin, Kirill, 71034 Böblingen (DE)
(74) Vertreter: BRP Renaud & Partner mbB Rechtsanwälte Patentanwälte Steuerberater

(56) Entgegenhaltungen:
- EP-A1- 1 298 289
- DE-A1- 2 216 772
- DE-B3-102012 207 960
- DE-U1- 9 312 405

## Beschreibung

Die vorliegende Erfindung betrifft eine Abgasnachbehandlungseinrichtung für eine Abgasanlage einer Brennkraftmaschine, die beispielweise in einem Kraftfahrzeug angeordnet sein kann, gemäß dem Oberbegriff des Anspruchs 1. Die Erfindung betrifft außerdem eine Kartusche für eine derartige Abgasnachbehandlungseinrichtung.

Abgasanlagen für Brennkraftmaschinen können in bekannter Weise Schalldämpfer und Abgasreinigungseinrichtungen aufweisen, wie zum Beispiel Katalysatoren und Partikelfilter. Eine hierbei zum Einsatz kommende Abgasnachbehandlungseinrichtung kann dabei für eine einzige Abgasnachbehandlungsfunktion spezialisiert sein. Ebenso sind kombinierte Einrichtungen bekannt, bei denen wenigstens zwei unterschiedliche Funktionen realisiert werden, wie zum Beispiel ein Partikelfilter in Kombination mit einem Katalysator, wobei außerdem noch eine Schalldämpfungswirkung integriert sein kann. Insbesondere bei komplexeren Abgasnachbehandlungseinrichtungen, die ein Partikelfilterelement enthalten, kann vorgesehen sein, das Partikelfilterelement während der Lebensdauer der Abgasanlage zumindest einmal auszutauschen. Hierzu ist es erforderlich, das jeweilige Partikelfilterelement austauschbar in der Abgasnachbehandlungseinrichtung anzuordnen. Entsprechendes gilt grundsätzlich auch für andere Abgasnachbehandlungselemente wie in SCR-Katalysatoren, Oxidationskatalysatoren und anderen Katalysatoren.

Zu diesem Zweck kann eine Abgasnachbehandlungseinrichtung ein Gehäuse aufweisen, in dem zumindest ein Aufnahmerohr angeordnet ist, das einen Aufnahmeraum enthält. Ferner kann die Abgasnachbehandlungseinrichtung zumindest eine Kartusche aufweisen, die im Aufnahmeraum austauschbar angeordnet ist, und die ein Kartuschenrohr sowie wenigstens ein im Kartuschenrohr angeordnetes Abgasnachbehandlungselement aufweist. Zum Austauschen des Abgasnachbehandlungselements kann nun bei geöffnetem Gehäuse die gesamte Kartusche einfach aus dem Aufnahmerohr herausgezogen und durch eine neue Kartusche ersetzt werden, die dann in das Aufnahmerohr eingeschoben wird. Die Verwendung derartiger Kartuschen vereinfacht den Austausch des jeweiligen Abgasnachbehandlungselements, da innerhalb der Kartusche insbesondere die Lagerung des jeweiligen Abgasnachbehandlungselements innerhalb des Kartuschenrohrs auf konventionelle Weise realisiert werden kann, beispielsweise mittels einer radial verpressten Lagermatte. Somit lässt sich insbesondere ein herkömmliches Canning von Abgasnachbehandlungselement, Lagermatte und Kartuschenrohr durchführen, um eine derartige Kartusche herzustellen.

Problematisch bei derartigen Abgasnachbehandlungseinrichtungen ist der Umstand, dass sich radial zwischen dem Kartuschenrohr und dem Aufnahmerohr im Betrieb der Abgasnachbehandlungseinrichtung eine Bypassströmung ausbilden kann, die einen für die Abgasreinigungsfunktion vorgesehenen, durch das jeweilige Abgasnachbehandlungselement hindurchgeführten Abgasströmungspfad umgeht. Auf diese Weise wird einerseits die Effizienz der Abgasreinigungswirkung reduziert. Andererseits können sich dadurch in einem radial zwischen Kartuschenrohr und Aufnahmerohr ausgebildeten Ringraum Verunreinigungen ablagern, die im Wartungsfall das Herausnehmen der Kartusche aus dem Aufnahmeraum erschweren.

Eine gattungsgemäße Abgasnachbehandlungseinrichtung ist beispielsweise aus der EP 1 298 289 A1 bekannt. Sie umfasst ein Gehäuse, in dem zumindest ein Aufnahmerohr angeordnet ist, das einen Aufnahmeraum enthält, sowie eine Kartusche, die im Aufnahmeraum austauschbar angeordnet ist und die ein Kartuschenrohr sowie wenigstens ein im Kartuschenrohr angeordnetes Abgasnachbehandlungselement aufweist. Dabei ist eine axiale Stirnseite des Kartuschenrohrs über wenigstens ein Federelement in Form einer Dichtung unter axialer Vorspannung axial an einer Ringstufe des Gehäuses abgestützt.

Aus der DE 22 16 772 A1 ist es bekannt, ein nicht austauschbares Abgasnachbehandlungselement im Gehäuse axial schwimmend anzuordnen, wozu an jedem Axialende des Abgasnachbehandlungselements jeweils ein Federelement angeordnet ist und axial vorgespannt am Gehäuse abgestützt ist. Das jeweilige Federelement ist dabei ein Blechformteil, das aus einem einzigen Blechstück durch Umformung hergestellt ist.

Weitere Abgasnachbehandlungseinrichtungen sind aus der DE 93 12 405 U1 und der DE 10 2012 207 960 B3 bekannt.

Die vorliegende Erfindung beschäftigt sich mit dem Problem, für eine Abgasnachbehandlungseinrichtung der vorstehend beschriebenen Art eine verbesserte Ausführungsform anzugeben, die sich insbesondere durch eine verbesserte Austauschbarkeit der Kartusche auszeichnet. Insbesondere wird hierzu eine Vermeidung besagter Bypassströmung angestrebt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Kartusche unter axialer Vorspannung an einer bezüglich des Aufnahmeraums ortsfesten Ringstufe axial abzustützen. Diese axiale Vorspannung kann dazu genutzt werden, die im Wartungsfall zum Herausziehen der Kartusche aus dem Aufnahmeraum erforderlichen Kräfte zu reduzieren. Zum Erzeugen einer solchen Vorspannung kommt erfindungsgemäß zumindest ein Federelement zum Einsatz. Vorzugsweise ist das jeweilige Federelement dabei so angeordnet, dass die axiale Vorspannung in einer Auszugsrichtung der Kartusche orientiert ist, also entgegen einer Einführrichtung, in der die Kartusche in das Aufnahmerohr eingeführt wird.

Allgemein wird dies dadurch erreicht, dass das Kartuschenrohr wenigstens an einer axialen Stirnseite über wenigstens ein Federelement unter axialer Vorspannung axial an einer Ringstufe abgestützt ist. Diese Ringstufe ist im Gehäuse ortsfest angeordnet. Vorzugsweise ist diese Ringstufe fest mit dem Aufnahmerohr verbunden. Insbesondere kann die Ringstufe an das Aufnahmerohr als separates Bauteil fest angebaut sein, z.B. durch Löten oder Schweißen, oder integral an dem Aufnahmerohr ausgeformt sein.

Es ist klar, dass im Kartuschenrohr auch mehrere Abgasnachbehandlungselemente angeordnet sein können. Bevorzugt ist jedoch die Unterbringung eines einzigen, insbesondere monolithischen, vorzugsweise keramischen, Abgasnachbehandlungselements. Bevorzugt ist das in der Kartusche gehaltene Abgasnachbehandlungselement ein Partikelfilterelement. Grundsätzlich kann es aber auch ein Katalysatorelement sein, z.B. eines Oxidationskatalysators oder eines SCR-Katalysators. Denkbar ist auch ein Partikelfilterelement mit einer katalytisch aktiven Beschichtung. Ferner ist auch vorstellbar, im Kartuschenrohr hintereinander verschiedene Abgasnachbehandlungselemente anzuordnen, z.B. ein Katalysatorelement und stromab davon ein Partikelfilterelement. Sofern das Abgasnachbehandlungselement ein Partikelfilterelement ist, kann die Kartusche auch als Partikelfilterkartusche bezeichnet werden. Handelt es sich beim Abgasnachbehandlungselement dagegen um ein Katalysatorelement, kann die Kartusche auch als Katalysatorkartusche bezeichnet werden.

Beim Federelement handelt es sich erfindungsgemäß um ein Metallbauteil und um ein Blechformteil, das aus einem einzigen Blechstück durch Umformung hergestellt ist.

Besonders vorteilhaft ist nun eine Ausführungsform, bei der das Federelement ringförmig umlaufend ausgestaltet ist. Durch diese Bauform kann die Vorspannung in der Umfangsrichtung gleichmäßig verteilt auf die Kartusche aufgebracht werden. Ferner reicht grundsätzlich ein einziges ringförmiges Federelement aus, um die gewünschte Vorspannung zu erzielen. Hierdurch sind jedoch Ausführungsformen nicht ausgeschlossen, bei denen mehrere Federelemente zum Einsatz kommen. Ein derartiges ringförmiges Federelement entfaltet bei entsprechender Ausgestaltung und Anordnung außerdem eine gewisse Dichtungswirkung. Somit kann die Verwendung eines ringförmigen, geschlossen umlaufenden Federelements außerdem dazu genutzt werden, eine Bypassströmung zu reduzieren oder zu verhindern, die einen durch das Partikelfilterelement hindurchgeführten Abgasströmungspfad umgeht.

Entsprechend einer besonders vorteilhaften Weiterbildung kann das Federelement so angeordnet werden, dass es besagten, durch das Partikelfilterelement hindurchgeführten Abgasströmungspfad gegenüber dem vorgenannten Ringraum dichtet, der radial zwischen dem Kartuschenrohr und dem Aufnahmerohr ausgebildet ist. Durch die Dichtungswirkung des Federelements kann die unerwünschte Bypassströmung signifikant reduziert und im Idealfall sogar vollständig unterbunden werden. Durch die reduzierte bzw. entfallende Bypassströmung erfolgt auch eine Reduzierung von Ablagerung bzw. Verunreinigungen im Ringraum, was ebenfalls dazu beiträgt, den Kartuschenwechsel zu erleichtern. Unabhängig davon führt die erzielte Dichtungswirkung zu einer verbesserten Effizienz des Partikelfilterelements bzw. der Abgasnachbehandlungseinrichtung hinsichtlich der Partikelfilterfunktion.

Gemäß einer zweckmäßigen Weiterbildung kann das Federelement ringförmig geschlossen umlaufend am Kartuschenrohr und/oder ringförmig geschlossen umlaufend an der Ringstufe anliegen. Besonders vorteilhaft ist dabei eine linienförmige Kontaktierung oder Anlage des Federelements am Kartuschenrohr und/oder an der Ringstufe. Durch die linienförmige und vorgespannte Anlage ergibt sich eine effiziente Dichtungswirkung zwischen dem Federelement und der Ringstufe einerseits und/oder zwischen dem Federelement und dem Kartuschenrohr andererseits. Somit kann das Federelement den Ringraum effizient gegenüber dem Abgasströmungspfad dichten. Eine solche linienförmige Kontaktierung lässt sich beispielsweise durch ein konvex gewölbtes Profil am Federelement im Bereich der Kontaktierung oder eine wulstförmige Erhebung am Federelement im Bereich der Kontaktierung realisieren.

Bei einer anderen Ausführungsform kann das Federelement zumindest eine radial nach außen vorstehende Führungskontur aufweisen, die am Aufnahmerohr radial abgestützt ist. Hierdurch ergibt sich im Bereich des Federelements eine Zentrierung des Kartuschenrohrs im Aufnahmerohr. Die Führungskontur kann dabei ringförmig umlaufend ausgestaltet sein oder durch eine Vielzahl von in der Umfangsrichtung voneinander beabstandeten lokalen Führungskonturelementen gebildet sein. Zweckmäßig ist die Führungskontur integral am Federelement ausgeformt. Des Weiteren kann die Führungskontur in einem die Stirnseite des Kartuschenrohrs aufweisenden Endabschnitt des Kartuschenrohrs angeordnet sein. Bevorzugt ist die integrierte Variante mit geschlossen umlaufender Führungskontur, da in diesem Fall die Führungskontur außerdem die Dichtungswirkung verbessert.

Des Weiteren kann das Federelement axial neben der Führungskontur wenigstens eine radiale Abstützkontur aufweisen, die am Kartuschenrohr radial abgestützt ist. Auch diese Abstützkontur kann zweckmäßig integral am Federelement ausgeformt sein. Zusätzlich oder alternativ kann diese radiale Abstützkontur ringförmig umlaufend ausgestaltet sein und insbesondere eine linienförmige Anlage am Kartuschenrohr besitzen. Ferner ist die Abstützkontur zweckmäßig an einer von der Stirnseite des Kartuschenrohrs abgewandten Seite der Führungskontur am Kartuschenrohr abgestützt. Auch hier lässt sich eine solche linienförmige Kontaktierung beispielsweise durch ein konvex gewölbtes Profil am Federelement im Bereich der Kontaktierung oder eine wulstförmige Erhebung am Federelement im Bereich der Kontaktierung realisieren.

Besonders vorteilhaft kann die Führungskontur radial zwischen dem Kartuschenrohr und dem Aufnahmerohr angeordnet sein, wodurch der vorstehend genannte Ringraum zur Unterbringung der Führungskontur bzw. zur Realisierung der Zentrierfunktion genutzt wird. Alternativ kann die Führungskontur axial zwischen einer axialen Stirnseite des Kartuschenrohrs und der Ringstufe angeordnet sein. Hierdurch steht für die radiale Zentrierung des Kartuschenrohrs innerhalb des Aufnahmerohrs mehr Verstellweg zur Verfügung, was die Zentrierung auch bei größeren Herstellungstoleranzen vereinfacht.

Bei einer ersten erfindungsgemäßen Lösung weist das Federelement zumindest einen Klemmbereich auf, der eine Stirnseite des Kartuschenrohrs umgreift und das Federelement am Kartuschenrohr durch Klemmung fixiert. Die Fixierung des Federelements am Kartuschenrohr führt dazu, dass beim Herausziehen der Kartusche gleichzeitig auch das Federelement aus dem Aufnahmeraum herausgezogen wird. Insbesondere kann somit das Federelement im Wartungsfall gleichzeitig mit der Kartusche ausgetauscht werden. Zweckmäßig ist das Federelement hierzu an der jeweiligen Kartusche vormontiert, so dass es quasi einen Bestandteil der Kartusche bildet.

Der Klemmbereich kann beispielsweise als Tasche ausgestaltet sein, in die ein die Stirnseite aufweisender Endabschnitt des Kartuschenrohrs axial eingesteckt ist. Hierdurch ergibt sich eine besonders effiziente radiale Klemmung des Endabschnitts im Klemmbereich.

Zweckmäßig können der Klemmbereich bzw. die Tasche ringförmig umlaufend ausgestaltet sein. Zweckmäßig ist der Klemmbereich bzw. die Tasche integral am Federelement ausgeformt.

Bei einer zweiten erfindungsgemäßen Lösung weist das Federelement wenigstens einen Clipsbereich auf, in den ein nach innen abgewinkelter Kragen des Kartuschenrohrs axial eingeclipst ist. Auch hier wird eine Fixierung des Federelements am Kartuschenrohr realisiert, um das Filterelement gleichzeitig mit der übrigen Kartusche im Wartungsfall aus dem Aufnahmeraum herausziehen zu können. Im Übrigen wird durch die Fixierung des Federelements am Kartuschenrohr eine vorbestimmte Relativlage zwischen Federelement und Kartuschenrohr hergestellt. Auch hier kann der Clipsbereich zweckmäßig ringförmig umlaufend ausgestaltet sein. Zusätzlich oder alternativ kann der Clipsbereich integral am Federelement ausgeformt sein. Die Formulierung "nach innen" bezieht sich dabei auf die Radialrichtung, mit anderen Worten, der Kragen weist radial nach innen. Der Kragen ist dabei bevorzugt um 90° gegenüber dem Kartuschenrohr abgewinkelt. Grundsätzlich sind jedoch auch andere Winkel denkbar, die größer oder kleiner als 90° sind.

Gemäß einer Weiterbildung kann der Clipsbereich einen Haltebereich aufweisen, der einen Innenrand des Kragens umgreift. Hierdurch wird auf besonders einfache Weise eine effiziente formschlüssige Fixierung in der Axialrichtung zwischen dem Federelement und dem Kartuschenrohr erreicht. Beispielsweise kann der Haltebereich in einem Längsschnitt des Federelements S-förmig sein. Ein derartiger Längsschnitt liegt dabei in einer Ebene, in der auch eine Längsmittelachse der Kartusche liegt. Auch hier ist zweckmäßig der Haltebereich integral am Clipsbereich bzw. integralem Federelement ausgeformt.

Gemäß einer anderen vorteilhaften Weiterbildung kann der Clipsbereich wenigstens eine Rastkontur aufweisen, die zum Fixieren bzw. zum Positionieren des Kragens am Clipsbereich mit einer am Kragen ausgebildeten zur Rastkontur komplementären Gegenrastkontur zusammenwirkt. Beispielsweise handelt es sich bei der Rastkontur um einen axial vorstehenden Vorsprung. Die dazu komplementäre Gegenrastkontur ist dann eine entsprechende Vertiefung. Ebenso kann die Rastkontur eine Vertiefung sein, während die Gegenrastkontur durch einen dazu komplementären Vorsprung gebildet ist. Besagte Rastkontur kann dabei punktuell ausgestaltet sein, also mehrere in der Umfangsrichtung verteilt angeordnete Rastkonturelemente aufweisen. Bevorzugt ist jedoch eine ringförmige Ausgestaltung der Rastkontur, wodurch die vorstehend genannte Dichtungswirkung verbessert werden kann. Auch hier ist eine integrale Bauweise bevorzugt, so dass die Rastkontur integral am Clipsbereich bzw. am Federelement ausgeformt ist.

Bei einer anderen vorteilhaften Ausführungsform kann das Federelement wenigstens einen axial federnden Federbereich aufweisen, der sich axial zwischen der Stirnseite und der Wand erstreckt. Auch hier ist der Federbereich zweckmäßig integral am Federelement ausgeformt. Mit Hilfe dieses axial federelastischen Federbereichs kann das Federelement thermisch bedingte Dehnungseffekte, die am Aufnahmerohr und am Kartuschenrohr zu unterschiedlichen Längenänderungen führen, elastisch kompensieren, ohne dass hierbei überhöhte Spannungen auftreten. Gleichzeitig kann eine ggf. mit dem Federelement realisierte Dichtungswirkung über den gesamten zu erwartenden Temperaturbereich der Abgasnachbehandlungseinrichtung gewährleistet werden, da das Federelement den ggf. erfolgenden Relativbewegungen elastisch folgen kann und stets vorgespannt an der Ringstufe und am Kartuschenrohr anliegt.

Bei einer vorteilhaften Weiterbildung kann der Federbereich im Längsschnitt des Federelements eine Wellen- oder Wellstruktur aufweisen. Auch hier liegt der Längsschnitt in einer Schnittebene, in der auch die Längsmittelachse der Kartusche liegt. Durch eine derartige Wellstruktur ist das Federelement über einen vergleichsweise großen Verstellbereich axial federelastisch. Das Federelement ist hierdurch im Federelement wie ein Wellbalg geformt. Das Federelement ist zweckmäßig aus einem Metall, vorzugsweise aus Federstahl, hergestellt.

Bei einer anderen vorteilhaften Ausführungsform kann das Federelement einen Abstützbereich aufweisen, mit dem sich das Federelement axial an der Ringstufe abstützt und der wenigstens eine Rastkontur aufweist, die zum radialen Fixieren bzw. zum radialen Positionieren des Federelements an der Ringstufe mit einer an der Ringstufe ausgebildeten zur Rastkontur komplementären Gegenrastkontur zusammenwirkt. Auch hier kann eine gewünschte Relativlage zwischen dem Federelement und der Ringstufe, insbesondere eine radiale Zentrierung des Federelements relativ zur Ringstufe erreicht werden. Ferner kann auch hier die Rastkontur beispielsweise durch einen axial abstehenden Vorsprung gebildet sein, während die dazu komplementäre Gegenrastkontur durch eine entsprechende axiale Vertiefung gebildet ist. Auch hier ist der umgekehrte Fall möglich, bei dem die Rastkontur durch eine axiale Vertiefung gebildet ist, während die Gegenrastkontur dann einen axialen Vorsprung besitzt. Zweckmäßig ist die Rastkontur in der Umfangsrichtung vollständig, ringförmig umlaufend ausgestaltet. Denkbar ist auch hier eine punktuelle Verteilung der Rastkontur in der Umfangsrichtung, beispielsweise in Form separater Rastkonturelemente. Ferner ist auch hier eine Integration der Rastkontur in das Federelement bevorzugt.

Bei einer anderen Ausführungsform kann die Ringstufe am Aufnahmerohr axial gegenüber einer Einführöffnung zum Einführen der Kartusche in den Aufnahmeraum fest angeordnet sein. Beispielsweise kann die Ringstufe am Aufnahmerohr integral ausgeformt sein. Ebenso kann sie daran angeschweißt oder daran angelötet sein. Ferner ist die Einführöffnung des Aufnahmerohrs innerhalb des Gehäuses und axial beabstandet sowie axial fluchtend zu einer Gehäuseöffnung angeordnet, durch die hindurch die Kartusche in die Einführöffnung einführbar ist. Zweckmäßig kann nun die Gehäuseöffnung mit einer zum Wechseln der Kartusche entfernbaren Verschlusseinrichtung verschlossen sein, die sich axial an der Kartusche bzw. an dem Kartuschenrohr abstützt und dabei die Kartusche bzw. das Kartuschenrohr gegen die Vorspannung des Federelements in den Aufnahmeraum hineindrückt. Durch diese Bauweise wird zum einen erreicht, dass sich die Kartusche besonders einfach in den Abgasströmungspfad einbinden lässt, der innerhalb des Gehäuses verläuft. Zum anderen wird im Wartungsfall erreicht, dass beim Entfernen der Verschlusseinrichtung die dem Federelement entgegenwirkende Gegenkraft aufgehoben wird, so dass das Federelement nunmehr die Kartusche aus dem Aufnahmeraum herausdrücken kann, wodurch das Herausziehen der Kartusche aus dem Aufnahmerohr erleichtert wird.

Bei einer besonders vorteilhaften Weiterbildung kann die vorgenannte Verschlusseinrichtung einen Deckel zum Verschließen der Gehäuseöffnung sowie einen Abstützring aufweisen, der axial an der Kartusche bzw. am Kartuschenrohr abgestützt ist und der radial von Abgas durchströmbar ist. Beispielsweise kann hierzu ein umlaufender Rand des Abstützrings perforiert sein. Ebenso ist denkbar, dass sich der Abstützring über mehrere, in der Umfangsrichtung verteilte axiale Stege an der Kartusche bzw. am Kartuschenrohr abstützt, so dass in der Umfangsrichtung zwischen benachbarten Stegen hinreichend Freiraum vorliegt, der von Abgas durchströmbar ist.

Eine erfindungsgemäße Kartusche umfasst somit ein Kartuschenrohr zum austauschbaren Einsetzen der Kartusche in ein Aufnahmerohr der Abgasnachbehandlungseinrichtung und wenigstens ein im Kartuschenrohr angeordnetes Abgasnachbehandlungselement. Die Kartusche weist außerdem wenigstens ein Federelement an einer axialen Stirnseite des Kartuschenrohrs aufweisen, das zum axialen Abstützen des Kartuschenrohrs unter axialer Vorspannung an einer Ringstufe der Abgasnachbehandlungseinrichtung vorgesehen ist, wenn die Kartusche in das Aufnahmerohr eingesetzt ist. Zusätzlich kann eine axiale Stirnseite des Kartuschenrohrs einen nach innen abgewinkelten Kragen aufweisen, an dem sich wenigstens ein Federelement unter axialer Vorspannung abstützen kann, wenn die Kartusche in das Aufnahmerohr eingesetzt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen Längsschnitt einer Abgasnachbehandlungseinrichtung im Bereich einer Kartusche,
- Fig. 2: ein Längsschnitt wie in Fig. 1, jedoch in auseinandergezogener Darstellung im Bereich der Kartusche,
- Fig. 3: ein vergrößertes Detail III aus Fig. 1 im Bereich eines Federelements,
- Fig. 4 bis 6: Detailansichten wie in Fig. 3, jedoch bei anderen Ausführungsformen.

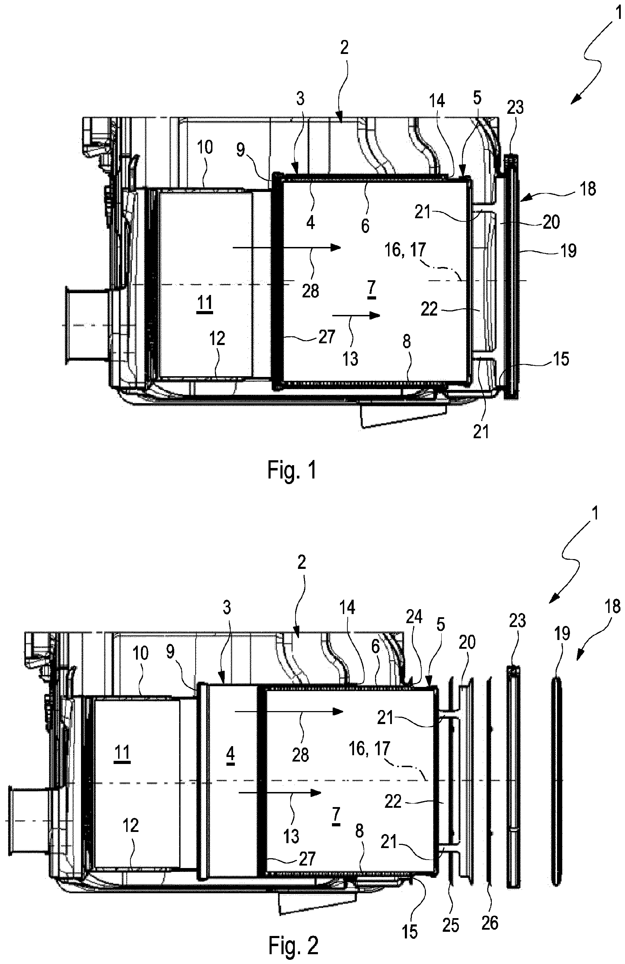

Entsprechend den Fig. 1 und 2 umfasst eine Abgasnachbehandlungseinrichtung 1, die sich für eine Verwendung in einer hier nicht gezeigten Abgasanlage einer Brennkraftmaschine, vorzugsweise eines Kraftfahrzeugs, eignet, ein Gehäuse 2, in dem zumindest ein Aufnahmerohr 3 angeordnet ist, das einen Aufnahmeraum 4 enthält. Die Abgasnachbehandlungseinrichtung 1 weist außerdem zumindest eine Kartusche 5 auf, die ein Kartuschenrohr 6 und zumindest ein im Kartuschenrohr 6 angeordnetes Abgasnachbehandlungselement 7 aufweist. Im hier gezeigten Beispiel ist als Abgasnachbehandlungselement 7 exemplarisch ein Partikelfilterelement vorgesehen, so dass im Folgenden das Abgasnachbehandlungselement 7 auch als Partikelfilterelement 7 bezeichnet werden kann. Bei einer alternativen Ausführungsform, die hier nicht gezeigt ist, kann das Abgasnachbehandlungselement 7 auch ein Katalysatorelement sein, wie z.B. ein Oxidationskatalysatorelement oder ein SCR-Katalysatorelement, wobei SCR in bekannter Weise für "Selective Catalytic Reduction" steht.

Zweckmäßig ist das jeweilige Partikelfilterelement 7 mittels einer Lagermatte 8 im Kartuschenrohr 6 gelagert und axial fixiert. Hierzu ist die Lagermatte 8 regelmäßig radial zwischen dem Partikelfilterelement 7 und dem Kartuschenrohr 6 verpresst. Im Beispiel ist im Kartuschenrohr 6 nur ein einziges Partikelfilterelement 7 angeordnet. Insbesondere handelt es sich beim jeweiligen Abgasnachbehandlungselement 7 um einen einstückigen, monolithischen Keramikkörper. Bei einer anderen Ausführungsform können auch zwei oder mehr Abgasnachbehandlungselemente 7 axial hintereinander im Kartuschenrohr 6 angeordnet sein. Zweckmäßig kommen dann hinsichtlich ihrer Abgasnachbehandlungsfunktion gleiche oder ähnliche Abgasnachbehandlungselemente 7 zum Einsatz, z.B. zwei oder mehr Partikelfilterelemente 7. Alternativ können auch zwei oder mehr Abgasnachbehandlungselemente 7 zum Einsatz kommen, die verschiedene Abgasnachbehandlungsfunktionen besitzen, z.B. ein Partikelfilterelement 7 und ein Katalysatorelement. Denkbar ist ebenfalls die Verwendung eines metallischen Partikelfilterelements 7, das insbesondere auch die ohne Verwendung einer Lagermatte 8 am Kartuschenrohr 6 fixiert sein kann.

Das Aufnahmerohr 3 ist über eine Ringstufe 9 mit einem Katalysatorrohr 10 verbunden, in dem ein Katalysatorelement 11 angeordnet ist. Im gezeigten Beispiel ist das Katalysatorelement 11 ebenfalls mittels einer Lagermatte 12 im Katalysatorrohr 10 gelagert und axial fixiert. Beim Katalysatorelement 11 handelt es sich zweckmäßig um einen Oxidationskatalysator. Bezüglich einer in den Fig. 1 und 2 durch einen Pfeil angedeuteten Abgasströmungsrichtung 13 ist das Katalysatorelement 11 vorzugsweise stromauf des Partikelfilterelements 7 angeordnet.

Die Ringstufe 9 befindet sich am Aufnahmerohr 3 axial gegenüber einer Einführöffnung 14 des Aufnahmerohrs 3. Diese Einführöffnung 14 dient zum Einführen der Kartusche 5 in den Aufnahmeraum 4. Dabei ist die Ringstufe 9 bezüglich des Aufnahmerohrs 3 fest angeordnet. Bei den hier gezeigten Ausführungsbeispielen handelt es sich bei der Ringstufe 9 um ein separates Bauteil, das am Aufnahmerohr 3 auf geeignete Weise befestigt ist. Im Beispiel ist die Ringstufe 9 auch am Katalysatorrohr 10 auf geeignete Weise befestigt. Geeignete Befestigungsmittel sind beispielsweise eine axiale Steckverbindung (gezeigt) vorzugsweise in Kombination mit einer Schweißverbindung oder Lötverbindung (nicht gezeigt).

Die Einführöffnung 14 ist innerhalb des Gehäuses 2 und zu einer Gehäuseöffnung 15 axial fluchtend sowie axial beabstandet angeordnet. Die Axialrichtung wird dabei durch eine Längsmittelachse 16 des Aufnahmerohrs 3 definiert, die im Einbauzustand der Kartusche 5 mit einer Längsmittelachse 17 der Kartusche 5 zusammenfällt. Demnach verläuft die Axialrichtung parallel zur jeweiligen Längsmittelachse 16 bzw. 17. Diese Gehäuseöffnung 15 ist so dimensioniert, dass die Kartusche 5 durch die Gehäuseöffnung 15 hindurch in die Einführöffnung 14 und somit in das Aufnahmerohr 3 bzw. den Aufnahmeraum 4 einführbar ist. Im Wartungsfall kann somit die Kartusche 5 durch die Gehäuseöffnung 15 aus dem Gehäuse 2 herausgenommen werden. Im Einbauzustand bzw. für den Betrieb der Abgasnachbehandlungseinrichtung 1 ist die Gehäuseöffnung 15 mit einer Verschlusseinrichtung 18 verschlossen, die so ausgestaltet ist, dass sie zum Wechseln der Kartusche 5 entfernbar ist. Diese Verschlusseinrichtung 18 stützt sich axial an der Kartusche 5 ab und drückt dabei die Kartusche 5 in der Abgasströmungsrichtung 13 in den Aufnahmeraum 4 hinein. Die Verschlusseinrichtung 18 umfasst dabei einen Deckel 19 zum Verschließen der Gehäuseöffnung 15 sowie einen Abstützring 20, der axial am Kartuschenrohr 6 abgestützt ist. Der Abstützring 20 ist so gestaltet, dass er von Abgas radial durchströmbar ist. Dies wird im Beispiel dadurch erreicht, dass sich der Abstützring 20 über mehrere axial verlaufende Stege 21 am Kartuschenrohr 6 abstützt, so dass einerseits axial zwischen Kartuschenrohr 6 und Abstützring 20 und andererseits in Umfangsrichtung zwischen benachbarten Stegen 21 mehrere, von Abgas durchströmbare Öffnungen 22 ausgebildet sind. Zum Fixieren des Deckels 19 am Gehäuse 2 ist außerdem eine Schelle 23 vorgesehen, die für den Wartungsfall besonders einfach entfernbar ist. In der damit realisierten Schellenverbindung verspannt die Schelle 23 axial den Deckel 19 mit einem in Fig. 2 mit 24 bezeichneten Öffnungsrand. In diese Schellenverbindung ist der Abstützring 20 eingebunden. Zur Realisierung einer ausreichenden Gasdichtigkeit der Verschlusseinrichtung 18 können in Fig. 2 gezeigte Dichtungen 25 und 26 zum Einsatz kommen. Die eine Dichtung 25 ist dabei axial zwischen dem Öffnungsrand 24 und dem Abstützring 20 angeordnet, während die andere Dichtung 26 axial zwischen dem Abstützring 20 und dem Deckel 19 angeordnet ist. Die Schelle 23 übergreift den Öffnungsrand 24 und den Deckel 19 und sämtliche axial dazwischen angeordneten Komponenten, also hier die beiden Dichtungen 25, 26 und den Abstützring 20.

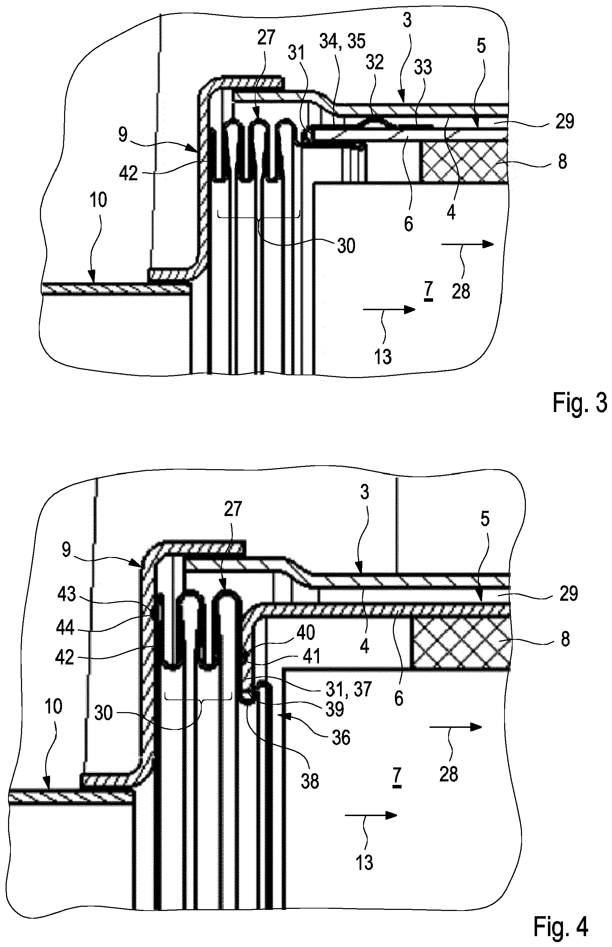

Die hier vorgestellte Abgasnachbehandlungseinrichtung 1 zeichnet sich außerdem durch ein Federelement 27 aus, das in den Fig. 3 bis 5 für unterschiedliche Ausführungsformen vergrößert dargestellt ist. Das Federelement 27 stützt sich einerseits am Kartuschenrohr 6 und andererseits an der Ringstufe 9 axial ab. Dabei ist das Federelement 27 in dem in Fig. 1 wiedergegebenen Einbauzustand axial zusammengedrückt, so dass es eine axiale Vorspannung erzeugt, mit der letztlich die Kartusche 5 über das Federelement 27 an der Ringstufe 9 axial abgestützt ist. Das Federelement 27 treibt dadurch die Kartusche 5 in der Abgasströmungsrichtung 13 an.

Gemäß den Fig. 3 bis 6 ist das Federelement 27 ringförmig und geschlossen umlaufend ausgestaltet. Ferner ist es so angeordnet, dass es einen Abgasströmungspfad 28, der ebenfalls durch einen Pfeil angedeutet ist und der durch das Partikelfilterelement 7 hindurchführt, gegenüber einem Ringraum 29 abdichtet, der radial zwischen dem Kartuschenrohr 6 und dem Aufnahmerohr 3 ausgebildet ist. Die Radialrichtung bezieht sich hierbei auf die jeweilige Längsmittelachse 16, 17. Für eine verbesserte Dichtungswirkung liegt das Federelement 27 einerseits linienförmig am Kartuschenrohr 6 und andererseits linienförmig an der Ringstufe 9 an.

Bei allen hier gezeigten Ausführungsformen der Fig. 3 bis 6 besitzt das Federelement 27 einen axial federnden Federbereich 30, der sich axial zwischen einer Stirnseite 31 des Kartuschenrohrs 6 und der Ringstufe 9 befindet. Bevorzugt ist dabei die hier gezeigte Bauweise, bei welcher der Federbereich 30 eine Wellenstruktur aufweist. Dabei wechseln sich mehrere nach radial innen und nach radial außen gewölbte Wellen ab, die sich axial nicht berühren, wodurch die gewünschte axiale Federelastizität entsteht.

Bei allen hier gezeigten Ausführungsformen ist das Federelement 27 einteilig bzw. einstückig geformt, so dass alle hier erkennbaren Abschnitte, Konturen und Bereiche des Federelements 27 daran integral ausgeformt sind. Neben dieser bevorzugten integralen Ausgestaltung ist grundsätzlich auch eine gebaute Ausführungsform denkbar, bei der das Federelement 27 aus wenigstens zwei Einzelteilen zusammengebaut ist.

Bei den Ausführungsformen der Fig. 3, 5 und 6 weist das Federelement 27 zumindest eine radial nach außen vorstehende Führungskontur 32 auf, die am Aufnahmerohr 3 radial abgestützt ist. Zweckmäßig ist diese Führungskontur 32 dabei ringförmig geschlossen umlaufend ausgestaltet, wodurch eine zusätzliche Dichtungswirkung realisierbar ist. Die Führungskontur 32 dient jedoch in erster Linie zur radialen Zentrierung des Kartuschenrohrs 6 bezüglich des Aufnahmerohrs 3 im Aufnahmeraum 4.

Bei der in Fig. 3 gezeigten Ausführungsform ist die Führungskontur 32 radial zwischen dem Kartuschenrohr 6 und dem Aufnahmerohr 3 angeordnet. Ferner ist hier vorgesehen, dass sich an die Führungskontur 32 an einer vom Federbereich 30 abgewandten Seite eine Abstützkontur 33 anschließt, die sich radial außen am Kartuschenrohr 6 radial abstützt. Ferner ist bei dieser Ausführungsform ein Klemmbereich 34 am Federelement 27 ausgebildet, der die Stirnseite 31 des Kartuschenrohrs 6 umgreift und dabei durch Klemmung eine Fixierung des Federelements 27 am Kartuschenrohr 6 bewirkt. Im Beispiel der Fig. 3 ist der Klemmbereich 34 als Tasche 35 ausgestaltet, in die ein Endabschnitt des Kartuschenrohrs 6, der die Stirnseite 31 aufweist, axial eingesteckt ist.

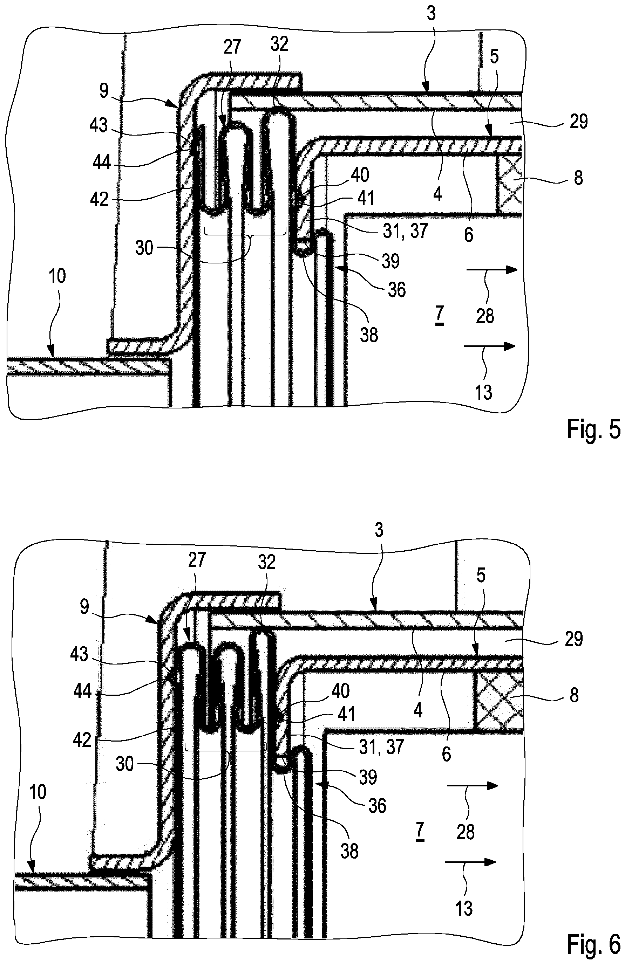

Bei den Ausführungsformen der Fig. 5 und 6 ist dagegen die Führungskontur 32 axial zwischen der Stirnseite 31 und der Ringstufe 9 angeordnet. Hierbei ist die Führungskontur 32 besonders einfach mit Hilfe einer nach außen gewölbten Welle des wellenförmigen Federbereichs 30 gebildet. Zweckmäßig wird hierzu die erste, an das Kartuschenrohr 6 angrenzende Welle der Wellenstruktur radial so weit nach außen verlängert, dass sie mit dem Aufnahmerohr 3 radial in Kontakt kommt.

Bei den in den Fig. 4 bis 6 gezeigten Ausführungsformen weist das Federelement 27 einen Clipsbereich 36 auf, der mit dem Kartuschenrohr 6 verclipst ist. Hierzu ist das Kartuschenrohr 6 an seinem der Ringstufe 9 zugewandten Ende mit einem nach innen abgewinkelten Kragen 37 versehen, der bei diesen Ausführungsformen die Stirnseite 31 des Kartuschenrohrs 6 bildet. Der Kragen 37 kann dabei so weit nach innen abgewinkelt sein, dass er das Partikelfilterelement 7 randseitig radial überlappt. Besagter Kragen 37 ist nun in den Clipsbereich 36 des Federelements 27 axial eingeclipst, wodurch eine formschlüssige Fixierung des Federelements 27 am Kartuschenrohr 6 entsteht. Hierzu ist am Clipsbereich 36 ein Haltebereich 38 ausgeformt, der im Längsschnitt hier S-förmig ausgebildet ist und der einen Innenrand 39 des Kragens 37 umgreift.

Bei den in den Fig. 4 bis 6 gezeigten Ausführungsformen weist der Clipsbereich 36 außerdem zumindest eine Rastkontur 40 auf, die insbesondere mit einer am Kragen 37 ausgebildeten komplementären Gegenrastkontur 41 zusammenwirken kann, um das Federelement 27 im Clipsbereich 36 am Kragen 37 radial zu fixieren. Zweckmäßig ist die Rastkontur 40 hier als ringförmig geschlossener umlaufender, axial abstehender Vorsprung am Federelement 27 ausgebildet. Die Gegenrastkontur 41 ist als dazu komplementäre, ringförmig umlaufende axiale Vertiefung am Kartuschenrohr 6 geformt. Sofern die Gegenrastkontur 41 fehlt, kann mit Hilfe der Rastkontur 40 der gewünschte linienförmige Kontakt zwischen Federelement 27 und Kartuschenrohr 6 realisiert werden, so dass die Rastkontur 40 dann eine Dichtkontur 40 oder Linienkontaktkontur 40 ist oder als solche dient.

Bei den Ausführungsformen der Fig. 3 bis 6 stützt sich das Federelement 27 über einen Abstützbereich 42 axial an der Ringstufe 9 ab. Wie erwähnt, wird hierbei eine linienförmige Abstützung bevorzugt.

Bei den Ausführungsformen der Fig. 4 bis 6 ist in diesem Abstützbereich 42 außerdem zumindest eine Rastkontur 43 vorgesehen, die zweckmäßig mit einer dazu komplementären Gegenrastkontur 44 zusammenwirken kann, die hierzu in der Ringstufe 9 ausgebildet ist. Im gezeigten Beispiel ist die Rastkontur 43 durch einen axial abstehenden Vorsprung am Federelement 27 gebildet, der zweckmäßig in der Umfangsrichtung geschlossen umläuft. Die Gegenrastkontur 44 ist dann durch eine entsprechende, ringförmig geschlossen umlaufende axiale Vertiefung an der Ringstufe 9 gebildet. Die Rastkontur 43 bewirkt hier ebenfalls eine radiale Fixierung des Federelements 27 im Abstützbereich 42 an der Ringstufe 9. Sofern die Gegenrastkontur 44 fehlt, kann mit Hilfe der Rastkontur 43 der gewünschte linienförmige Kontakt zwischen Federelement 27 und Ringstufe 9 realisiert werden, so dass die Rastkontur 43 dann eine Dichtkontur 43 oder Linienkontaktkontur 43 ist oder als solche dient.

## Patentansprüche

1. Abgasnachbehandlungseinrichtung für eine Abgasanlage einer Brennkraftmaschine,
- mit einem Gehäuse (2), in dem zumindest ein Aufnahmerohr (3) angeordnet ist, das einen Aufnahmeraum (4) enthält,
- mit wenigstens einer Kartusche (5), die im Aufnahmeraum (4) austauschbar angeordnet ist und die ein Kartuschenrohr (6) sowie wenigstens ein im Kartuschenrohr (6) angeordnetes Abgasnachbehandlungselement (7) aufweist,
- wobei eine axiale Stirnseite (31) des Kartuschenrohrs (6) über wenigstens ein Federelement (27) unter axialer Vorspannung axial an einer Ringstufe (9) des Gehäuses (2) abgestützt ist,
**dadurch gekennzeichnet,**
- **dass** das Federelement (27) ein Blechformteil ist, das aus einem einzigen Blechstück durch Umformung hergestellt ist, und
- **dass** das Federelement (27)
- entweder wenigstens einen Klemmbereich (34) aufweist, der eine Stirnseite (31) des Kartuschenrohrs (6) umgreift und das Federelement (27) am Kartuschenrohr (6) durch Klemmung fixiert, wobei der Klemmbereich (34) als Tasche (35) ausgestaltet ist, in die ein die Stirnseite (31) aufweisender Endabschnitt des Kartuschenrohrs (6) axial eingesteckt ist,
- oder wenigstens einen Clipsbereich (36) aufweist, in den ein nach innen abgewinkelter Kragen (37) des Kartuschenrohrs (6) axial eingeclipst ist.

2. Abgasnachbehandlungseinrichtung nach Anspruch 1,
**dadurch gekennzeichnet,**
**dass** der Clipsbereich (36) einen Haltebereich (38) aufweist, der einen Innenrand (39) des Kragens (37) umgreift.

3. Abgasnachbehandlungseinrichtung nach Anspruch 1 oder 2,
**dadurch gekennzeichnet,**
**dass** der Clipsbereich (36) wenigstens eine Rastkontur (40) aufweist, die zum Positionieren des Kragens (37) am Clipsbereich (36) mit einer am Kragen (37) ausgebildeten Gegenrastkontur (41) zusammenwirkt.

4. Abgasnachbehandlungseinrichtung nach einem der vorhergehenden Ansprüche,
**dadurch gekennzeichnet,**
**dass** das Federelement (27) ringförmig umlaufend ausgestaltet ist.

5. Abgasnachbehandlungseinrichtung nach Anspruch 4,
**dadurch gekennzeichnet,**
**dass** das Federelement (27) einen durch das Abgasnachbehandlungselement (7) hindurchführenden Abgasströmungspfad (28) gegenüber einem Ringraum (29) dichtet, der radial zwischen dem Kartuschenrohr (6) und dem Aufnahmerohr (3) ausgebildet ist.

6. Abgasnachbehandlungseinrichtung nach Anspruch 5,
**dadurch gekennzeichnet,**
**dass** das Federelement (27) linienförmig am Kartuschenrohr (6) und/oder linienförmig an der Ringstufe (9) anliegt.

7. Abgasnachbehandlungseinrichtung nach einem der Ansprüche 1 bis 6,
**dadurch gekennzeichnet,**
**dass** das Federelement (27) wenigstens eine radial nach außen vorstehende Führungskontur (32) aufweist, die am Aufnahmerohr (3) radial abgestützt ist.

8. Abgasnachbehandlungseinrichtung nach Anspruch 7,
**dadurch gekennzeichnet,**
**dass** die Führungskontur (32) radial zwischen dem Kartuschenrohr (6) und dem Aufnahmerohr (3) angeordnet ist.

9. Abgasnachbehandlungseinrichtung nach Anspruch 7,
**dadurch gekennzeichnet,**
**dass** die Führungskontur (32) axial zwischen einer axialen Stirnseite (31) des Kartuschenrohrs (6) und der Ringstufe (9) angeordnet ist.

10. Abgasnachbehandlungseinrichtung nach einem der Ansprüche 1 bis 9,
**dadurch gekennzeichnet,**
**dass** das Federelement (27) wenigstens einen axial federnden Federbereich (30) aufweist, der sich axial zwischen einer Stirnseite (31) des Kartuschenrohrs (6) und der Ringstufe (9) erstreckt.

11. Abgasnachbehandlungseinrichtung nach Anspruch 10,
**dadurch gekennzeichnet,**
**dass** der Federbereich (30) im Längsschnitt eine Wellstruktur aufweist.

12. Abgasnachbehandlungseinrichtung nach einem der Ansprüche 1 bis 11,
**dadurch gekennzeichnet,**
**dass** das Federelement (27) einen Abstützbereich (42) aufweist, mit dem sich das Federelement (27) axial an der Ringstufe (9) abstützt und der wenigstens eine Rastkontur (43) aufweist, die zum radialen Positionieren des Federelements (27) an der Ringstufe (9) mit einer an der Ringstufe (9) ausgebildeten Gegenrastkontur (44) zusammenwirkt.

13. Abgasnachbehandlungseinrichtung nach einem der Ansprüche 1 bis 12,
**dadurch gekennzeichnet,**
- **dass** die Ringstufe (9) am Aufnahmerohr (3) axial gegenüber einer Einführöffnung zum Einführen der Kartusche (5) in den Aufnahmeraum (4) fest angeordnet ist,
- **dass** die Einführöffnung (14) innerhalb des Gehäuses (2) und axial fluchtend zu einer Gehäuseöffnung (15) angeordnet ist, durch die hindurch die Kartusche (5) in die Einführöffnung (14) einführbar ist,
- **dass** die Gehäuseöffnung (15) mit einer zum Wechseln der Kartusche (5) entfernbaren Verschlusseinrichtung (18) verschlossen ist, die sich axial an der Kartusche (5) abstützt und die Kartusche (5) gegen die Vorspannung des Federelements (27) in den Aufnahmeraum (4) hineindrückt.

14. Abgasnachbehandlungseinrichtung nach Anspruch 13,
**dadurch gekennzeichnet,**
**dass** die Verschlusseinrichtung (18) einen Deckel (19) zum Verschließen der Gehäuseöffnung (15) und einen Abstützring (20) aufweist, der axial an der Kartusche (5) abgestützt ist und radial von Abgas durchströmbar ist.

15. Kartusche (5), die dazu ausgelegt ist, im Aufnahmerohr (3) der Abgasnachbehandlungseinrichtung (1) nach einem der vorhergehenden Ansprüche austauschbar eingesetzt zu werden,
- wobei die Kartusche (5) aufweist:
- ein Kartuschenrohr (6) zum austauschbaren Einsetzen der Kartusche (5) in ein Aufnahmerohr (3) der Abgasnachbehandlungseinrichtung (1),
- wenigstens ein im Kartuschenrohr (3) angeordnetes Abgasnachbehandlungselement (7) und
- wenigstens ein Federelement (27), das
- entweder wenigstens einen Klemmbereich (34) aufweist, der eine Stirnseite (31) des Kartuschenrohrs (6) umgreift und das Federelement (27) am Kartuschenrohr (6) durch Klemmung fixiert, wobei der Klemmbereich (34) als Tasche (35) ausgestaltet ist, in die ein die Stirnseite (31) aufweisender Endabschnitt des Kartuschenrohrs (6) axial eingesteckt ist,
- oder wenigstens einen Clipsbereich (36) aufweist, in den ein nach innen abgewinkelter Kragen (37) des Kartuschenrohrs (6) axial eingeclipst ist.

## Claims

1. Exhaust after-treatment device for an exhaust system of an internal combustion engine,
- with a housing (2) in which at least one receiving tube (3) which contains a receiving space (4) is arranged,
- with at least one cartridge (5) which is arranged exchangeably in the receiving space (4) and which has a cartridge tube (6) and at least one exhaust after-treatment element (7) arranged in the cartridge tube (6),
- wherein an axial end face (31) of the cartridge tube (6) is axially supported on an annular step (9) of the housing (2) via at least one spring element (27) under axial prestress,
**characterised in that**
- the spring element (27) is a sheet-metal shaped part which is produced from a single sheet-metal piece by forming, and
- **in that** the spring member (27)
- has either at least one clamping region (34), which engages around an end face (31) of the cartridge tube (6) and fixes the spring element (27) to the cartridge tube (6) by clamping, wherein the clamping region (34) is designed as a slot (35) into which an end section of the cartridge tube (6) having the end face (31) is inserted axially,
- or has at least one clip region (36) into which an inwardly angled neck (37) of the cartridge tube (6) is clipped axially.

2. Exhaust after-treatment device according to claim 1,
**characterised in that**
the clip region (36) has a holding region (38) which encompasses an inner edge (39) of the neck (37).

3. Exhaust after-treatment device according to claim 1 or 2,
**characterised in that**
the clip region (36) has at least one detent contour (40) which, for positioning the neck (37) on the clip region (36), cooperates with a counter-detent contour (41) formed on the neck (37).

4. Exhaust after-treatment device according to any one of the preceding claims,
**characterised in that**
the spring element (27) is designed to be annularly circumferential.

5. Exhaust after-treatment device according to Claim 4,
**characterised in that**
the spring element (27) seals an exhaust gas flow path (28) passing through the exhaust after-treatment element (7) with respect to an annular space (29) which is formed radially between the cartridge tube (6) and the receiving tube (3).

6. Exhaust after-treatment device according to claim 5,
**characterised in that**
the spring element (27) abuts the cartridge tube (6) in a linear manner and/or the annular step (9) in a linear manner.

7. Exhaust after-treatment device according to any one of claims 1 to 6,
**characterised in that**
the spring element (27) has at least one radially outwardly projecting guide contour (32) which is radially supported on the receiving tube (3).

8. Exhaust after-treatment device according to claim 7,
**characterised in that**
the guide contour (32) is arranged radially between the cartridge tube (6) and the receiving tube (3).

9. Exhaust after-treatment device according to claim 7,
**characterised in that**
the guide contour (32) is arranged axially between an axial end face (31) of the cartridge tube (6) and the annular step (9).

10. Exhaust after-treatment device according to any one of claims 1 to 9,
**characterised in that**
the spring element (27) has at least one axially resilient spring region (30) which extends axially between an end face (31) of the cartridge tube (6) and the annular step (9).

11. Exhaust after-treatment device according to Claim 10,
**characterised in that**
the spring region (30) has an undulated structure in longitudinal section.

12. Exhaust after-treatment device according to any one of claims 1 to 11,
**characterised in that**
the spring element (27) has a support region (42) with which the spring element (27) is supported axially on the annular step (9) and which has at least one detent contour (43) which, for radial positioning of the spring element (27) on the annular step (9), interacts with a counter-detent contour (44) formed on the annular step (9).

13. Exhaust after-treatment device according to any one of claims 1 to 12,
**characterised in that**
- the annular step (9) is arranged axially on the receiving tube (3) opposite an insertion opening for introducing the cartridge (5) into the receiving space (4);
- the insertion opening (14) is arranged inside the housing (2) and axially aligned with a housing opening (15) through which the cartridge (5) can be inserted into the insertion opening (14);
- the housing opening (15) is closed by a closure device (18) which can be removed for changing the cartridge (5), which is supported axially on the cartridge (5) and presses the cartridge (5) into the receiving space (4) against the prestressing of the spring element (27).

14. Exhaust after-treatment device according to claim 13,
**characterised in that**
the closure device (18) has a cover (19) for closing the housing opening (15) and a support ring (20) which is supported axially on the cartridge (5) and through which exhaust can flow radially.

15. Cartridge (5) which is designed to be inserted in the receiving tube (3) of the exhaust after-treatment device (1) in such a way that it can be replaced in accordance with any one of the preceding claims,
- the cartridge (5) having:
- a cartridge tube (6) for exchangeably inserting the cartridge (5) into a receiving tube (3) of the exhaust after-treatment device (1),
- at least one exhaust after-treatment element (7) arranged in the cartridge tube (3), and
- at least one spring element (27),
- which either has at least one clamping region (34) which engages around an end face (31) of the cartridge tube (6) and fixes the spring element (27) to the cartridge tube (6) by clamping, the clamping region (34) being designed as a slot (35), into which an end portion of the cartridge tube (6) having the end face (31) is inserted axially,
- or has at least one clip region (36) into which an inwardly angled next (37) of the cartridge tube (6) is clipped axially.

## Revendications

1. Dispositif de traitement secondaire des gaz d'échappement pour une installation de gaz d'échappement d'un moteur à combustion interne,
- avec un carter (2), dans lequel est agencé au moins un tube de logement (3) qui contient un espace de logement (4),
- avec au moins une cartouche (5), qui est agencée dans l'espace de logement (4) de manière à pouvoir être remplacée et qui comporte un tube de cartouche (6) ainsi qu'au moins un élément de traitement secondaire des gaz d'échappement (7) agencé dans le tube de cartouche (6),
- dans lequel un côté frontal axial (31) du tube de cartouche (6) est appuyé de façon axiale à un épaulement annulaire (9) du carter (2) par l'intermédiaire d'au moins un élément ressort (27) et sous une précontrainte axiale,
**caractérisé**
- **en ce que** l'élément ressort (27) est une pièce formée en tôle qui est fabriquée par déformation à partir d'un seul morceau de tôle, et
- **en ce que** l'élément ressort (27)
- soit comporte au moins une zone de serrage (34) qui entoure un côté frontal (31) du tube de cartouche (6) et qui fixe par serrage l'élément ressort (27) au niveau du tube de cartouche (6), laquelle zone de serrage (34) est réalisée comme une poche (35) dans laquelle un tronçon terminal, comportant le côté frontal (31), du tube de cartouche (6) est enfoncé de façon axiale,
- soit comporte une zone de clipsage (36) dans laquelle un collet (37), coudé vers l'intérieur, du tube de cartouche (6) est clipsé de façon axiale.

2. Dispositif de traitement secondaire des gaz d'échappement selon la revendication 1,
**caractérisé**
**en ce que** la zone de clipsage (36) comporte une zone de retenue (38) qui entoure une paroi intérieure (39) du collet (37).

3. Dispositif de traitement secondaire des gaz d'échappement selon la revendication 1 ou 2,
**caractérisé**
**en ce que** la zone de clipsage (36) comporte au moins un contour d'enclenchement (40) qui coopère avec un contour d'enclenchement complémentaire (41) réalisé au niveau du collet (37) pour positionner le collet (37) au niveau de la zone de clipsage (36).

4. Dispositif de traitement secondaire des gaz d'échappement selon l'une quelconque des revendications précédentes,
**caractérisé**
**en ce que** l'élément ressort (27) est réalisé en forme d'anneau périphérique.

5. Dispositif de traitement secondaire des gaz d'échappement selon la revendication 4,
**caractérisé**
**en ce que** l'élément ressort (27) étanchéifie un trajet d'écoulement de gaz d'échappement (28) passant à travers l'élément de traitement secondaire des gaz d'échappement (7) par rapport à un espace annulaire (29) qui est réalisé de façon radiale entre le tube de cartouche (6) et le tube de logement (3).

6. Dispositif de traitement secondaire des gaz d'échappement selon la revendication 5,
**caractérisé**
**en ce que** l'élément ressort (27) est adjacent sous forme de ligne au tube de cartouche (6) et/ou sous forme de ligne à l'épaulement annulaire (9).

7. Dispositif de traitement secondaire des gaz d'échappement selon l'une quelconque des revendications 1 à 6,
**caractérisé**
**en ce que** l'élément ressort (27) comporte au moins un contour de guidage (32) qui dépasse de façon radiale vers l'extérieur et qui s'appuie de façon radiale au tube de logement (3).

8. Dispositif de traitement secondaire des gaz d'échappement selon la revendication 7,
**caractérisé**
**en ce que** le contour de guidage (32) est agencé de façon radiale entre le tube de cartouche (6) et le tube de logement (3).

9. Dispositif de traitement secondaire des gaz d'échappement selon la revendication 7,
**caractérisé en ce que** le contour de guidage (32) est agencé de façon axiale entre un côté frontal axial (31) du tube de cartouche (6) et l'épaulement annulaire (9).

10. Dispositif de traitement secondaire des gaz d'échappement selon l'une quelconque des revendications 1 à 9,
**caractérisé**
**en ce que** l'élément ressort (27) comporte au moins une zone de ressort (30) faisant ressort de façon axiale qui s'étend de façon axiale entre un côté frontal (31) du tube de cartouche (6) et l'épaulement annulaire (9).

11. Dispositif de traitement secondaire des gaz d'échappement selon la revendication 10,
**caractérisé**
**en ce que** la zone de ressort (30) présente une structure ondulée en coupe longitudinale.

12. Dispositif de traitement secondaire des gaz d'échappement selon l'une quelconque des revendications 1 à 11,
**caractérisé**
**en ce que** l'élément ressort (27) comporte une zone d'appui (42) avec laquelle l'élément ressort (27) s'appuie de façon axiale à l'épaulement annulaire (9) et qui comporte au moins un contour d'enclenchement (43) qui coopère avec un contour d'enclenchement complémentaire (44) réalisé au niveau de l'épaulement annulaire (9) pour positionner de façon radiale l'élément ressort (27) au niveau de l'épaulement annulaire (9).

13. Dispositif de traitement secondaire des gaz d'échappement selon l'une quelconque des revendications 1 à 12,
**caractérisé**
- **en ce que** l'épaulement annulaire (9) au niveau du tube de logement (3) est agencé de manière fixe de façon axiale par rapport à une ouverture d'introduction destinée à l'introduction de la cartouche (5) dans l'espace de logement (4),
- **en ce que** l'ouverture d'introduction (14) est agencée à l'intérieur du carter (2) et alignée de façon axiale avec une ouverture de carter (15) à travers laquelle la cartouche (5) peut être introduite dans l'ouverture d'introduction (14),
- **en ce que** l'ouverture de carter (15) est fermée avec un dispositif de fermeture (18) qui peut être enlevé pour changer la cartouche (5) et qui s'appuie de façon axiale à la cartouche (5) et pousse la cartouche (5) dans l'espace de logement (4) à l'encontre de la précontrainte de l'élément ressort (27).

14. Dispositif de traitement secondaire des gaz d'échappement selon la revendication 13,
**caractérisé**
**en ce que** le dispositif de fermeture (18) comporte un couvercle (19) pour fermer l'ouverture de carter (15) et un anneau d'appui (20) qui est appuyé de façon axiale à la cartouche (5) et peut être traversé de façon radiale par des gaz d'échappement.

15. Cartouche (5), qui est conçue pour être placée dans le tube de logement (3) du dispositif de traitement secondaire des gaz d'échappement (1) selon l'une quelconque des revendications précédentes,
- dans lequel la cartouche (5) comporte :
- un tube de cartouche (6) pour placer la cartouche (5) dans un tube de logement (3) du dispositif de traitement secondaire des gaz d'échappement (1) de manière à ce qu'elle puisse être remplacée,
- au moins un élément de traitement secondaire des gaz d'échappement (7) agencé dans le tube de cartouche (3) et
- au moins un élément ressort (27) qui
- soit comporte au moins une zone de serrage (34) qui entoure un côté frontal (31) du tube de cartouche (6) et qui fixe par serrage l'élément ressort (27) au niveau du tube de cartouche (6), laquelle zone de serrage (34) est réalisée comme une poche (35) dans laquelle un tronçon terminal, comportant le côté frontal (31), du tube de cartouche (6) est enfoncé de façon axiale,
- soit comporte une zone de clipsage (36) dans laquelle un collet (37), coudé vers l'intérieur, du tube de cartouche (6) est clipsé de façon axiale.
